(19) Europäisches Patentamt
European Patent Office
Office européen des brevets

(11) Veröffentlichungsnummer: **0 067 354 B1**

(12) # EUROPÄISCHE PATENTSCHRIFT

(45) Veröffentlichungstag der Patentschrift: **05.02.86**

(51) Int. Cl.⁴: **C 09 K 19/60**

(21) Anmeldenummer: **82104773.5**

(22) Anmeldetag: **01.06.82**

(54) **Flüssigkristallines Material enthaltend Azofarbstoffe.**

(30) Priorität: **13.06.81 DE 3123519**

(43) Veröffentlichungstag der Anmeldung: **22.12.82 Patentblatt 82/51**

(45) Bekanntmachung des Hinweises auf die Patenterteilung: **05.02.86 Patentblatt 86/6**

(84) Benannte Vertragsstaaten: **CH DE FR GB IT LI NL**

(56) Entgegenhaltungen:
**US - A - 4 128 497**
**US - A - 4 179 395**

**MOLECULAR CRYSTALS & LIQUID CRYSTALS, vol.55, no.9, 1979, Gordon and Breach Science Publishers, Inc., London (GB) R.J. COX: "Liquid crystal quest-host systems", Seiten 1-32**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Claussen, Uwe, Dr., Carl-Rumpff-Strasse 29, D-5090 Leverkusen 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft flüssigkristallines Material enthaltend Azofarbstoffe. Das flüssigkristalline Material findet Verwendung in Displays.

Unter Displays werden hier opto-elektronische Anzeigeelemente verstanden, die in der Regel aus 2 parallelen, im Abstande von 5-50 µ angeordneten Platten bestehen, von denen wenigstens eine aus lichtdurchlässigem Material hergestellt ist. An den Innenseiten der Platten werden Elektroden angebracht, der Raum zwischen ihnen ist mit dem farbstoffhaltigen, flüssigkristallinen Material gefüllt. Der Aufbau und die Herstellung der optoelektronischen Anzeige ist bekannt (Kelker, Hatz, Handbook of Liquid Crystals S. 611 ff; 1980).

Ebenfalls ist bekannt, daß man in das flüssigkristalline Material ausgesuchte Farbstoffe einbetten kann, die den vom äußeren angelegten Feld bewirkten Richtungs- und Ordnungsänderungen des flüssigkristallinen Materials folgen (sog. guest-host-Wechselwirkung). Diese besondere Eigenschaft macht geeignete Farbstoffe selten, wenn man neben den genannten dichroitischen Eigenschaften zusätzlich Echtheiten verlangt, die eine technische Nutzung des Effekts ermöglichen. Wichtige Voraussetzungen hierfür sind die Lichtechtheit, eine ausreichende Löslichkeit und die Verträglichkeit mit anderen Farbstoffen.

In der Literatur sind zahlreiche geeignete Einzelfarbstoffe beschrieben. So sind auch häufig Azofarbstoffe genannt worden (R.J. Cox: Mol. Crystals Liquid Crystals, 1979, S. 1-32).

Diese Azofarbstoffe weisen im allgemeinen einen hohen Ordnungsgrad auf. Jedoch sind die Farbstärken selten ausreichend, und regelmäßig ist die Lichtechtheit zu niedrig. Als Folge dieser Erkenntnis hat sich der Schwerpunkt der Entwicklung brauchbarer Farbstoffe auf die Stoffklasse der Anthrachinone verlagert (siehe z.B. DE-OS 3 028 593, DE-OS 3 009 974, DE-OS 3 006 744).

Überraschenderweise wurde nun gefunden, daß sich Azofarbstoffe der Formel

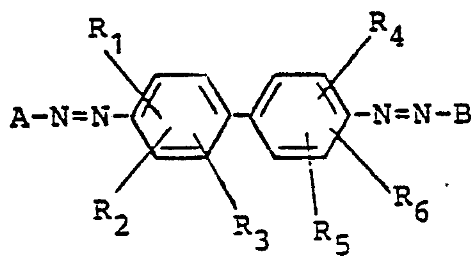

(I)

ausgezeichnet zur Verwendung in flüssigkristallinem. Material eignen, wobei das flüssigkristalline Material 0,01 bis 10 Gew.-% eines Azofarbstoffs der Formel (I) enthält. Die Farbstoffe sind überragend lichtecht, sehr farbstark und gut löslich.

In Formel (I) bezeichnen:

A,B Reste von Kupplungskomponenten, insbesondere der Benzol-, Naphthalin- und Pyrazolreihe.

$R_1$, $R_2$, $R_3$, $R_4$, $R_5$, $R_6$ Wasserstoff, Halogen, Trifluormethyl, Nitro, Alkyl, Alkoxy, Alkylthio, Alkylcarbonyl, Alkoxycarbonyl, mit der Maß-gabe, daß wenigstens einer der Reste $R_1$-$R_6$ von Wasserstoff verschieden ist und mindestens zwei Wasserstoff bezeichnen.

Bevorzugt ist flüssigkristallines Material enthaltend 0,01 bis 10 Gew.-% einer Verbindung der Formel

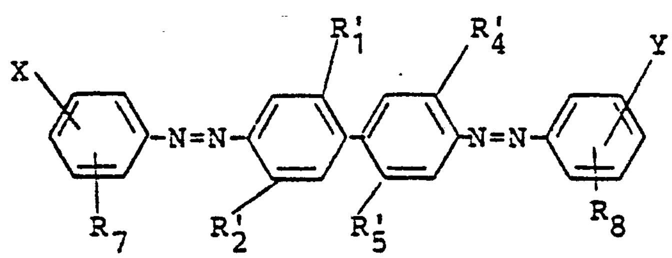

(II)

in der

$R_1'$, $R_2'$, $R_4'$, $R_5'$ Wasserstoff, Halogen, Trifluormethyl, Nitro, Alkyl, Alkoxy, Alkylthio, Alkylcarbonyl, Alkoxycarbonyl, mit der Maßgabe, daß wenigstens einer dieser Reste von Wasserstoff verschieden ist, bezeichnen,

$R_7$, $R_8$ Wasserstoff, Halogen, Cyan, Nitro, Alkyl, Alkoxy, bezeichnen und

X für $-OR_9$, $-SR_9$ oder $-\underset{R_{10}}{\underset{|}{N}}-R_{11}$ und

Y für $-OR_{12}$, $-SR_{12}$ oder $-\underset{R_{14}}{\underset{|}{N}}-R_{13}$ stehen

wobei

$R_9$, $R_{10}$, $R_{11}$, $R_{12}$, $R_{13}$, $R_{14}$ Wasserstoff, gegebenenfalls substituiertes Alkyl, gegebenenfalls substituiertes Cycloalkyl, gegebenenfalls substituiertes Aryl, gegebenenfalls substituiertes Aralkyl oder Acyl bezeichnen und $R_{10}$, $R_{11}$ bzw. $R_{13}$, $R_{14}$ zusammen unter Einschluß des N-Atoms einen 5- bis 8-gliedrigen Ring bilden können.

Weiterhin bevorzugt für den Einsatz in flüssigkristallinem Material in Mengen von 0,01 bis 10 Gew.-% sind Verbindungen der Formel

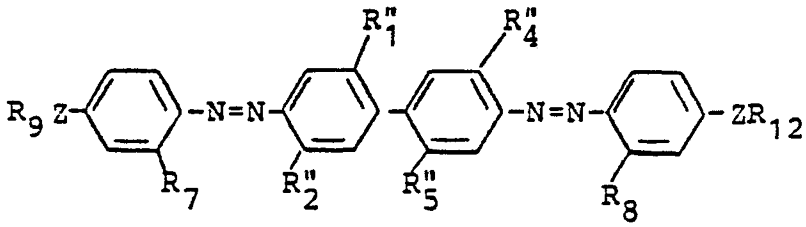

(III)

in der

Z ein O oder er S-Atom,

$R_1''$, $R_2''$, $R_4''$, $R_5''$ Wasserstoff, Halogen insbesondere Chlor, $C_1$-$C_4$-Alkyl insbesondere Methyl und $C_1$-$C_4$-Alkoxy insbesondere Methoxy, mit der Maßgabe, daß entweder $R_1''$ und $R_5''$ oder $R_2''$ und $R_4''$ Wasserstoff bedeuten, bezeichnen und $R_7$, $R_8$, $R_9$, $R_{12}$ die zu Formel (II) angegebenen Bedeutungen haben.

In den Substituenten der Formeln (I) und (II) bezeichnen Halogen vorzugsweise Chlor, Brom und Fluor, Alkyl vorzugsweise $C_1$-$C_6$-Alkyl, Alkoxy vorzugsweise $C_1$-$C_6$-Alkoxy, Alkylthio vorzugsweise $C_1$-$C_6$-Alkylthio insbesondere Methylthio, Alkylcarbonyl vorzugsweise ($C_1$-$C_6$-Alkyl)-carbonyl, Alkoxycarbonyl vorzugsweise ($C_1$-$C_6$-Alkoxy)-carbonyl.

$R_9$, $R_{10}$, $R_{11}$, $R_{12}$, $R_{13}$, $R_{14}$ stehen bevorzugt für Wasserstoff, $C_1$-$C_6$-Alkyl, Cyclopentyl, Cyclohexyl, Phenyl, Naphthyl, Benzyl, Phenethyl, wobei die für $R_9$, $R_{10}$, $R_{11}$ genannten Kohlenwasserstoffreste substituiert sein können sowie für Acyl.

Besonders bevorzugt eingesetzt werden Verbindungen der Formel:

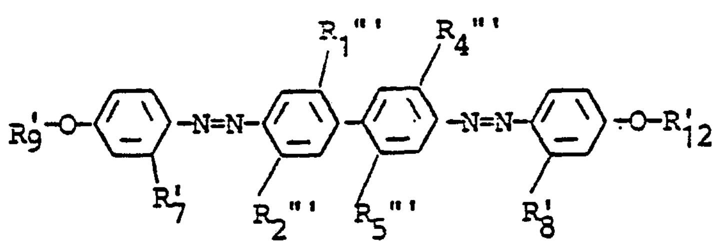

(IV)

in der

$R_1'''$, $R_2'''$, $R_4'''$, $R_5'''$ Halogen,insbesondere Chlor, Wasserstoff, $C_1$-$C_4$-Alkyl insbesondere Methyl, oder $C_1$-$C_4$-Alkoxy insbesondere Methoxy bezeichnen, mit der Maßgabe, daß mindestens einer, vorzugsweise jedoch zwei dieser Substituenten von Wasserstoff verschieden sind, bezeichnen und

$R_9'$, $R_{12}'$ $C_1$-$C_4$-Alkyl insbesondere Methyl, Benzyl, das durch Halogen insbesondere Chlor, Nitro, $C_1$-$C_4$-Alkyl insbesondere Methyl, $C_1$-$C_4$-Alkoxy insbesondere Methoxy substituiert sein kann oder gegebenenfalls substituiertes Aminocarbonyl bezeichnen und

$R_7'$, $R_8'$ für Wasserstoff, Halogen insbesondere Chlor, $C_1$-$C_4$-Alkyl insbesondere Methyl und $C_1$-$C_4$-Alkoxy insbesondere Methoxy stehen, in Mengen von 0,01 bis 10 Gew.-%.

Ganz besonders bevorzugt eingesetzt werden Verbindungen der Formel (IV), bei denen $R_1''' = R_5'''$ und/oder $R_2''' = R_4'''$ sind in den oben angegebenen Mengen.

Weiterhin bevorzugt eingesetzt werden Verbindungen der Formel

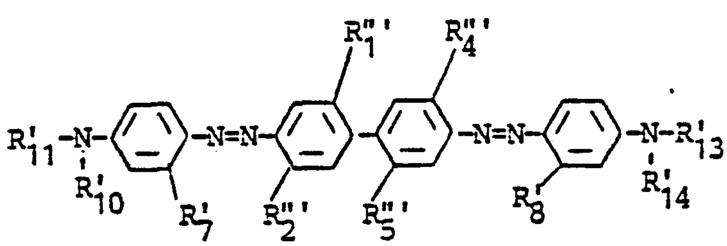

(V)

in der

$R_1'''$, $R_2'''$, $R_4'''$, $R_5'''$, $R_7'$ und $R_8'$ die zu Formel (IV) angegebene Bedeutung haben und

$R_{10}'$, $R_{11}'$, $R_{13}'$, $R_{14}'$ für Wasserstoff, $C_1$-$C_4$-Alkyl, das durch Hydroxy, Cyan, Phenoxy, $C_1$-$C_4$-Alkoxy, ($C_1$-$C_4$-Alkoxy)-carbonyloxy substituiert sein kann, Cyclohexyl, Phenyl, Naphthyl, Benzyl, Phenethyl, ($C_1$-$C_4$-Alkyl)-carbonyl, Benzoyl, ($C_1$-$C_4$-Alkylamino)-carbonyl und Phenylaminocarbonyl stehen und $R_{10}'$, $R_{11}'$ oder $R_{13}'$, $R_{14}'$ zusammen unter Einschluß des N-Atoms einen 5- oder 6-gliedrigen Ring bilden können, in Mengen von 0,01 bis 10 Gew.-%.

Ganz besonders bevorzugt eingesetzt werden Verbindungen der Formel (V), bei denen $R_1''' = R_5'''$ und/oder $R_2''' = R_4'''$ sind in den oben angegebenen Mengen.

Die erfindungsgemäß verwendbaren Farbstoffe sind bekannt oder nach literaturbekannten Verfahren herstellbar. Die bei der üblichen Synthese durch Diazotierung und Kupplung anfallenden Farbstoffe der Formel (I) sind in der Regel für den Einsatz in Displays nicht rein genug. Vielmehr hat es sich als zweckmäßig erwiesen, sie durch chromatographische Verfahren, vorzugsweise Säulen- oder Verteilungschromatogräphie, zu reinigen.

Die erfindungsgemäßen Farbstoffe lassen sich in flüssigkristallinen Materialien gelöst verwenden. Bevorzugt ist der Einsatz in Mischungen von Farbstoffen. Als flüssigkristalline Materialien kommen besonders solche mit positiver dielektrischer Anisotropie in Betracht. Die Zahl der Mischungsvarianten ist groß. Beispielsweise seien Mischungen von 4(4-Cyano-phenyl)-alkylcyclohexanen genannt, wobei Alkyl Propyl- (25 %), n-Pentyl- (37 %) und n-Heptyl- (25 %) bedeutet und als zusätzliche Komponente 4(4'-Cyanobiphenyl-)n-pentylcyclohexan (12 %) verwendet wird, oder Mischungen von 4(4'-Cyanobiphenyl)-al-kyl- und alkoxy-Verbindungen, beispielsweise mit der Bedeutung n-Pentyl- (53 %), n-Heptyl- (25 %) für Alkyl und Octyloxy- (14 %) für Alkoxy und 4(4'-Cyanoterphenyl)alkylverbindungen, z.B. n-Pentyl- (8 %) für Alkyl. Gleichfalls geeignet sind Mischungen, die 4-Cyanophenyl-pyrimidine enthalten. Das flüssigkristalline Material enthält die Farbstoffe gemäß Formel I bevorzugt zu etwa 0,5 bis etwa 5 Gew.-%.

Die in den flüssigkristallinen Materialien gelösten Farbstoffe und ihre Mischungen mit anderen Farbstoffen, insbesondere mit Anthrachinonfarbstoffen, lassen sich in opto-elektronischen Anzeigen verwenden.

**Beispiel 1**

3,5 g 4,4'-Diamino-2,2'-dimethyl-biphenylsulfat werden in 200 ml $H_20$ und 20 ml konz. Salzsäure gelöst und bei 0-5°C durch Zugabe von 3,5 g $NaNO_2$ in 50 ml $H_20$ diazotiert. Nach beendeter Diazotierung wird auf 8,3 g N,N-Dimethyl-3-nitroanilin gekuppelt und der pH-Wert des Reaktionsgemischs durch Zugabe von Natriumacetatlösung auf 5,5 gehalten. Nach 2,5 h wird abgesaugt, der Rückstand mit Wasser gewaschen und aus Chlorbenzol unter Zusatz von Tonerde und anschließend aus n-Butanol umkristallisiert. Man erhält gelbe Kristalle.

Der Farbstoff wird in einer nematischen Phase (TLI 1132 Fa. Merck), die ein Gemisch von substituierten phenylcyclohexanen darstellt, gelöst und der Dichroismus gemessen. Hierzu wird die Lösung in eine Zelle gefüllt, deren Wände mit einer Orientierungsschicht versehen sind und die planparallel im Abstand von 20 µ liegen. Die Absorption wird mit polarisiertem Licht gemessen, wobei das Polarisationsfilter so eingestellt wird, daß maximale Absorption erfolgt (A‖). Zu diesem Meßwert wird nun die minimale Absorption durch Drehen des Filters um 90° erzeugt (A⊥). Der Ordnungsgrad wird nach der bekannten Beziehung

$$S = \frac{\frac{A\parallel}{A\perp} - 1}{\frac{A\parallel}{A\perp} + 2}$$

berechnet.

Er beträgt bei der vorliegenden Verbindung S = 0,72.

Die in den folgenden Tabellen aufgeführten Verbindungen lassen sich analog zu Beispiel 1 ebenfalls ausgezeichnet als Farbstoffe in flüssig-kristallinen Phasen verwenden.

**Tabelle 1**

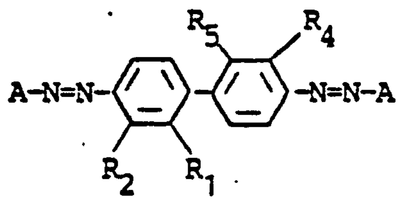

| A | $R_1$ | $R_2$ | $R_4$ | $R_5$ | Ordnungsgrad S |
|---|---|---|---|---|---|
| 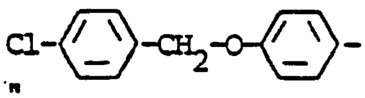 | Cl | Cl | Cl | Cl | 0,67 |
| " | $CH_3$ | H | H | $CH_3$ | 0,75 |
| " | Cl | H | H | Cl | 0,73 |
| " | H | Cl | Cl | H | 0,70 |
| " | H | $OCH_3$ | $OCH_3$ | H | 0,70 |
| 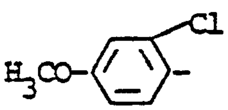 | H | Cl | Cl | H | 0,66 |
| 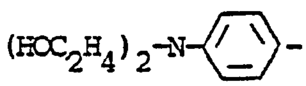 | $CH_3$ | H | H | $CH_3$ | 0,68 |
| 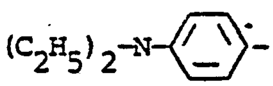 | $CH_3$ | H | H | $CH_3$ | 0,70 |
| 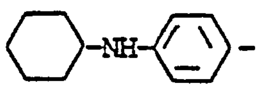 | Cl | Cl | Cl | Cl | 0,63 |
| 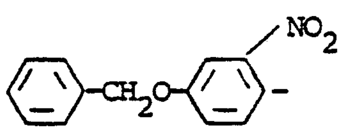 | Cl | H | H | Cl | 0,69 |
| 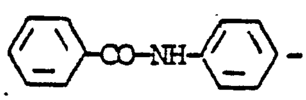 | Cl | H | H | Cl | 0,73 |
| 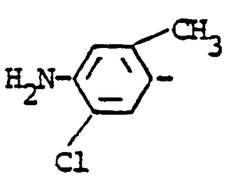 | $CH_3$ | H | H | $CH_3$ | 0,71 |

**Tabelle 2**

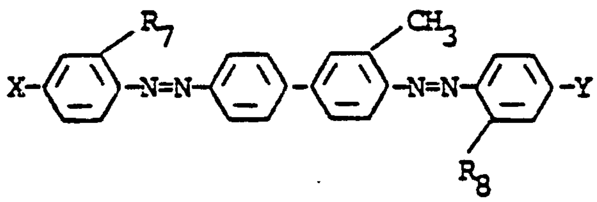

| X | Y | $R_7$ | $R_8$ | Farbton |
|---|---|---|---|---|
| $(CH_3)_2N-$ | $(CH_3)_2N-$ | Cl | Cl | orange |
| $(n-C_3H_7)_2N-$ | 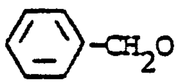 | H | H | gelborange |
| 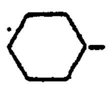 | 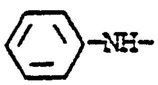 | $OCH_3$ | H | gelb |
| 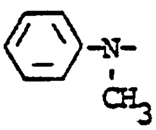 | $(CH_3)_2N-$ | H | H | gelborange |
| 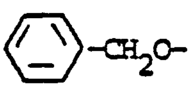 | 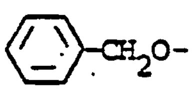 | H | H | gelb |
| $CH_3O-$ | $(CNC_2H_4)_2N-$ | Cl | H | gelb |

**Tabelle 3**

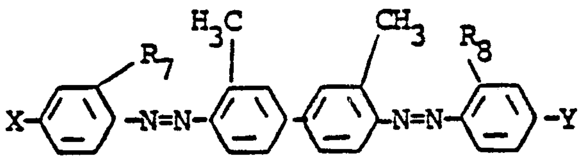

| X | Y | $R_7$ | $R_8$ | Farbton |
|---|---|---|---|---|
| $(CH_3)_2N-$ | $(C_2H_5)_2N-$ | H | $CH_3$ | orange |
| $(n-C_3H_7)_2N-$ | $(C_2H_5)_2N-$ | H | $CH_3$ | " |
| $(n-C_4H_9)_2N-$ | $(NCCH_2CH_2)_2N-$ | H | H | " |
| $n-C_4H_9NH-$ | $n-C_4H_9-NH-$ | $CH_3$ | $CH_3$ | " |
| $(C_2H_5)_2N-$ | $(C_2H_5)_2N-$ | $OCH_3$ | $OCH_3$ | " |
| $(C_2H_5)_2N-$ | $CH_3O-$ | $OCH_3$ | $OCH_3$ | orangegelb |
| $CH_3S-$ | $CH_3O-$ | H | H | gelb |
| 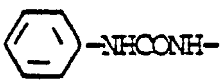 | 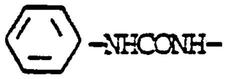 | H | H | gelb |
| 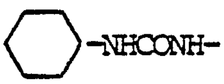 | 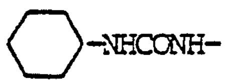 | H | H | " |
| 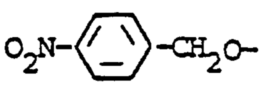 | 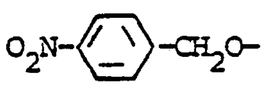 | H | H | " |
| 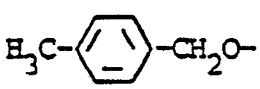 | 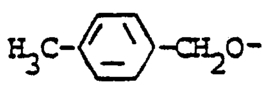 | H | H | " |
| $CH_3O-$ | $CH_3O$ | $CH_3$ | $CH_3$ | " |
| 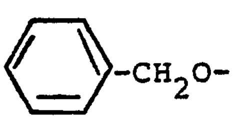 | 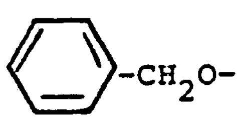 | H | H | gelb |

**Tabelle 4**

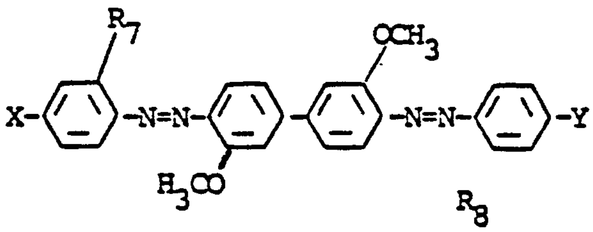

| X | Y | $R_7$ | $R_8$ | Farbton |
|---|---|---|---|---|
| $(C_2H_5)_2N-$ | $(C_2H_5)_2-N-$ | H | H | rotorange |
| $(n-C_3H_7)_2N-$ | $(n-C_3H_7)_2-N-$ | $CH_3$ | $CH_3$ | " |
| 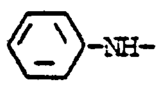 | 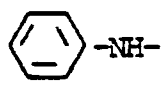 | H | H | gelborange |
| 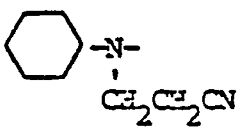 | 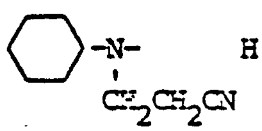 | H | H | rot |
| $(n-C_4H_9)_2-N-$ | $(n-C_4H_9)_2-N-$ | $CH_3$ | $CH_3$ | rotorange |
| $CH_3NHCONH-$ | $CH_3NHCONH-$ | H | H | gelborange |
| 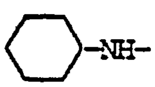 | 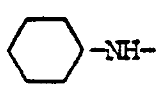 | H | H | orange |
| 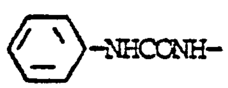 | 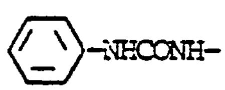 | H | H | gelborange |
| $CH_3S-$ | $CH_3S-$ | $CH_3$ | $CH_3$ | gelb |
| 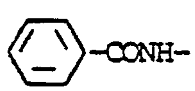 | 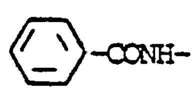 | H | $CH_3$ | orange |
| $CH_3CONH-$ | $CH_3CONH-$ | H | H | " |
| 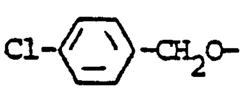 | $CH_3O-$ | $OCH_3$ | H | " |
| $(NCCH_2CH_2)_2N-$ | $(NCCH_2CH_2)_2N-$ | $CH_3$ | $CH_3$ | rot |

**Tabelle 4** (Fortsetzung)

| X | Y | $R_7$ | $R_8$ | Farbton |
|---|---|---|---|---|
| 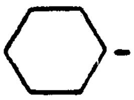 | 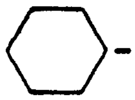 | $OCH_3$ | $OCH_3$ | gelb |
| $NCC_2H_4-N(CH_3)-$ | 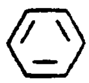 $-CH_2O-$ | H | H | " |
| $CH_3NHCONH-$ | $CH_3O-$ | Cl | Cl | gelborange |
| $(CH_3OC(O)OC_2H_4)_2N-$ | $(CH_3OC(O)OC_2H_4)_2N-$ | H | H | orange |

**Tabelle 5**

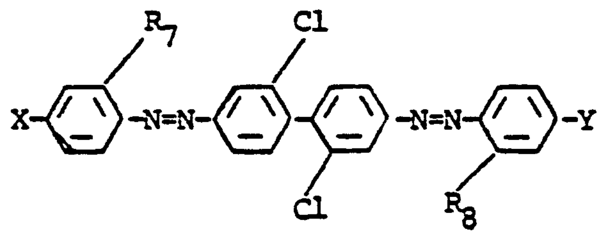

| X | Y | $R_7$ | $R_8$ | Farbton |
|---|---|---|---|---|
| $(CH_3)_2N-$ | $(CH_3)_2N-$ | H | H | gelborange |
| $(C_2H_5)_2N-$ | $(C_2H_5)_2N-$ | $CH_3$ | $CH_3$ | orange |
| $(CH_3)_2N-$ | $(CH_3)_2N-$ | Cl | Cl | " |
| 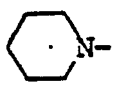 | 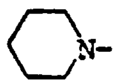 | H | H | gelb |
| 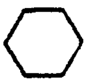-NHCONH- | 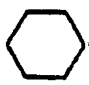-NHCONH- | H | H | " |
| $(n-C_3H_7)_2N-$ | $CH_3O-$ | Cl | Cl | " |
| 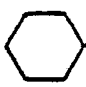-NH- | 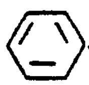$-CH_2O-$ | $CH_3$ | H | " |
| $(n-C_4H_9)_2N-$ | $H_3C-$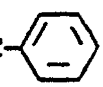$-CH_2O-$ | H | H | " |
| $(n-C_3H_7)_2N-$ | $C_2N-$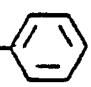$-CH_2O-$ | H | H | " |
| $(NCCH_2CH_2)_2N-$ | $(NCCH_2CH_2)_2N-$ | H | H | orange |
| 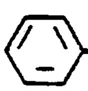$-CH_2O-$ | 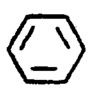$-CH_2O-$ | H | H | gelb |
| $CH_3O-$ | $CH_3O-$ | H | H | " |

**Tabelle 5** (Fortsetzung)

| X | Y | $R_7$ | $R_8$ | Farbton |
|---|---|---|---|---|
| 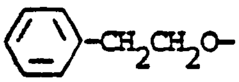 | 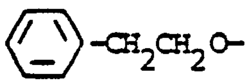 | H | H | gelb |
| $CH_3O-$ | 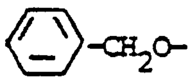 | $CH_3$ | H | " |
| 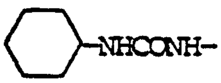 | 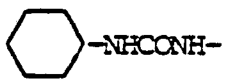 | H | H | " |
| $(CH_3OC(O)CC_2H_4)_2N-$ | $(CH_3OC(O)OC_2H_4)_2N-$ | H | H | orange |
| 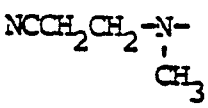 | 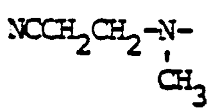 | H | H | " |

**Tabelle 6**

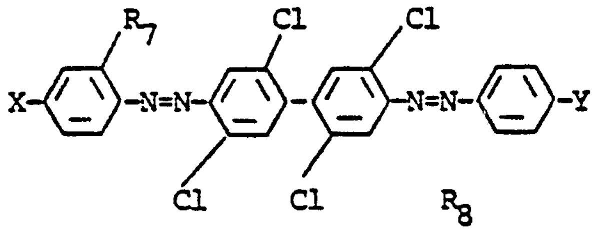

| X | Y | $R_7$ | $R_8$ | Farbton |
|---|---|---|---|---|
| $(HOCH_2CH_2)_2N-$ | $(HOCH_2CH_2)_2N-$ | H | H | orange |
| $(CH_3)_2N-$ | $(C_2H_5)_2N-$ | $CH_3$ | $CH_3$ | " |
| $(C_4H_9)_2N-$ | $(C_4H_9)_2N-$ | H | H | orangegelb |
| 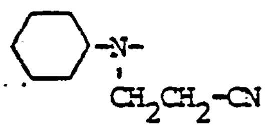 | 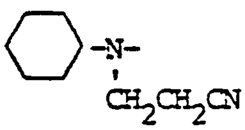 | H | H | orange |
| $(n-C_3H_7)_2N-$ | $CH_3O-$ | H | $CH_3$ | gelborange |
| $(C_2H_5)_2N-$ | 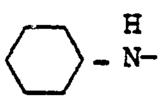 | Cl | $OCH_3$ | gelb |
| 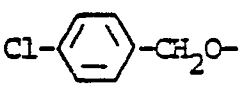 | 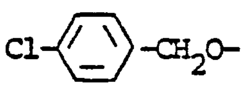 | $CH_3$ | $CH_3$ | orangegelb |
| 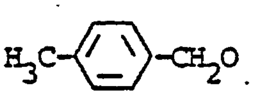 | $CH_3O-$ | H | H | gelb |
| $C_4H_9-N-$<br>$CH_2CH_2OH$ | 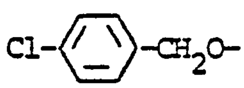 | H | H | " |
| $CH_3O-$ | $CH_3O-$ | H | H | " |
| 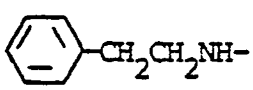 | 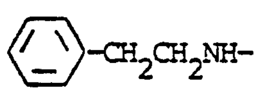 | H | H | " |
| 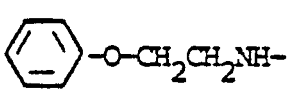 | 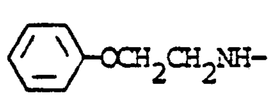 | H | H | " |

**Tabelle 7**

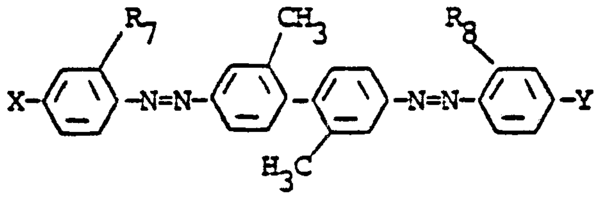

| X | Y | $R_7$ | $R_8$ | Farbton |
|---|---|---|---|---|
| $(CH_3)_2N-$ | $(CH_3)_2N-$ | H | H | orangegelb |
| $(CH_3)_2N-$ | $(CH_3)_2N-$ | Cl | Cl | orange |
| $(n-C_3H_7)_2N-$ | $CH_3O-$ | H | $CH_3$ | gelb |
| 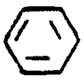 $-CH_2CH_2O-$ | 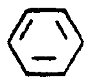 $-CH_2CH_2O-$ | $CH_3$ | $CH_3$ | gelb |
| $(NCCH_2CH_2)_2-N-$ | $(NCCH_2CH_2)_2N-$ | H | H | orangegelb |
| $(HOCH_2CH_2)_2-N-$ | $(HOCH_2CH_2)_2N-$ | H | H | gelborange |
| $CH_3O-$ | 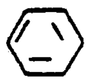 $-CH_2O-$ | $CH_3$ | H | gelb |
| $O_2N-$ 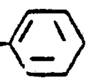 $-CH_2O-$ | $O_2N-$ 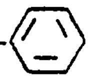 $-CH_2O-$ | H | H | gelb |
| $CH_3NHCONH-$ | $CH_3NHCONH-$ | H | H | gelborange |
| $CH_3O-$ | $CH_3O-$ | $CH_3O$ | $CH_3O$ | " |
| $(n-C_4H_9)_2N-$ | $(n-C_4H_9)_2N-$ | H | H | " |
| $H_3C-N-$<br>$CH_2CH_2CN$ | $H_3C-N-$<br>$CH_2CH_2CN$ | H | H | gelb |
| 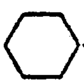 $-N-$<br>$CH_2CH_2OH$ | 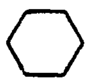 $-N-$<br>$CH_2CH_2OH$ | H | H | " |
| $Cl-$ 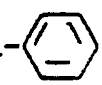 $-CH_2O-$ | $Cl-$ 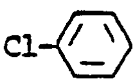 $-CH_2O-$ | H | H | " |

**Tabelle 7** (Fortsetzung)

| X | Y | $R_7$ | $R_8$ | Farbton |
|---|---|---|---|---|
| 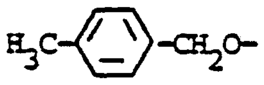 | 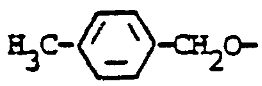 | H | H | gelb |
| 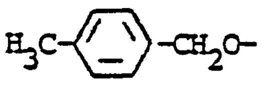 | $CH_3O-$ | $CH_3$ | H | " |
| 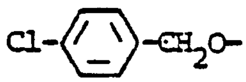 | $(C_2H_5)_2N-$ | H | $CH_3$ | " |

**Patentansprüche**

1. Flüssigkristallines Material enthaltend 0,01 bis 10 Gew.-% eines Azofarbstoffs der Formel

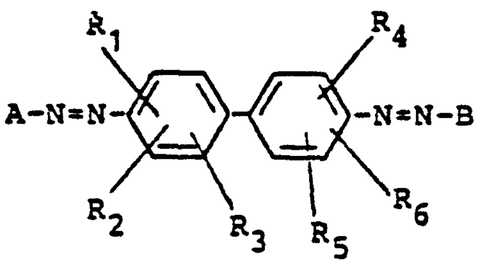

(I)

in der
A, B Reste von Kupplungskomponenten,insbesondere der Benzol-, Naphthalin- und Pyrazolreihe und
$R_1$, $R_2$, $R_3$, $R_4$, $R_5$, $R_6$ Wasserstoff, Halogen, Trifluormethyl, Nitro, Alkyl, Alkoxy, Alkylthio, Alkylcarbonyl, Alkoxycarbonyl, mit der Maßgabe, daß wenigstens einer der Reste $R_1$-$R_6$ von Wasserstoff verschieden ist und mindestens zwei Wasserstoff bezeichnet, sind.

2. Flüssigkristallines Material gemäß Anspruch 1 enthaltent einen Azofarbstoff der Formel

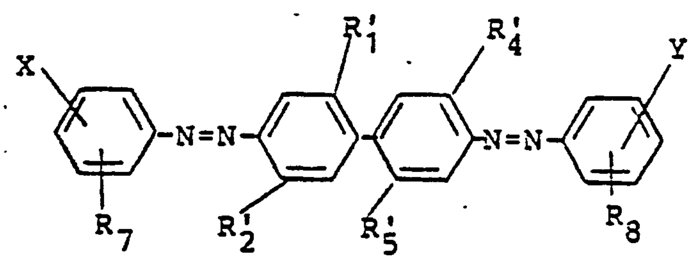

(II)

in der
$R_1'$, $R_2'$, $R_4'$, $R_5'$ Wasserstoff, Halogen, Trifluormethyl, Nitro, Alkyl, Alkoxy, Alkylthio, Alkylcarbonyl, Alkoxycarbonyl, mit der Maßgabe, daß wenigstens einer dieser Reste von Wasserstoff verschieden ist, bezeichnen,
$R_7$, $R_8$ Wasserstoff, Halogen, Cyan, Nitro, Alkyl, Alkoxy bezeichnen und
X für $-OR_9$, $-SR_9$ oder $-\underset{R_{10}}{\underset{|}{N}}-R_{11}$
und
Y für $-OR_{12}$, $-SR_{12}$ oder $-\underset{R_{14}}{\underset{|}{N}}-R_{13}$
stehen, wobei
$R_9$, $R_{10}$, $R_{11}$, $R_{12}$, $R_{13}$, $R_{14}$ Wasserstoff, gegebenenfalls substituiertes Alkyl, gegebenenfalls substituiertes Cycloalkyl, gegebenenfalls subetituiertes Aryl, gegebenenfalls substituiertes Aralkyl oder Acyl bezeichnen und $R_{10}$, $R_{11}$ bzw. $R_{13}$, $R_{14}$ zusammen unter Ein-schluß des N-Atom auch einen 5- bis 8-gliedrigen Ring bilden können.

3. Flüssigkristallines Material gemäß Anspruch 1 enthaltend einen Azofarbstoff der Formel

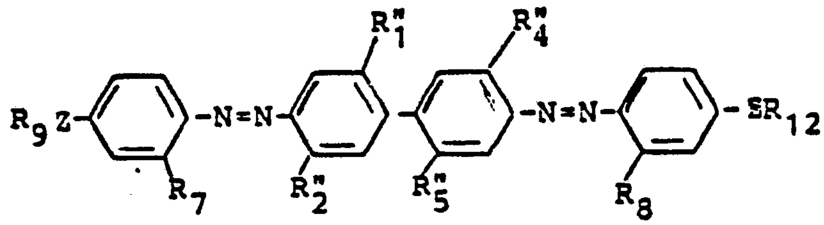

(III)

in der

Z ein O oder S-Atom,

$R_1''$, $R_2''$, $R_4''$, $R_5''$ Wasserstoff, Halogen, insbesondere Chlor, $C_1$-$C_4$-Alkyl, insbesondere Methyl und $C_1$-$C_4$-Alkoxy insbesondere Methoxy, mit der Maßgabe, daß entweder $R_1''$ und $R_5''$ oder $R_2''$ und $R_4''$ Wasserstoff bedeuten, bezeichnen und $R_7$, $R_8$, $R_9$, $R_{12}$ die in Anspruch 2 angegebenen Bedeutungen haben.

4. Flüssigkristallines Material gemäß Anspruch 1 enthaltend einen Azofarbstoff der Formel

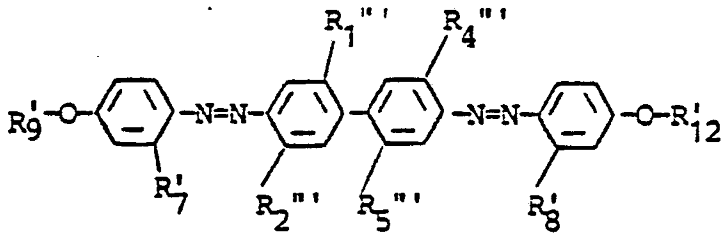

(IV)

in der

$R_1'''$, $R_2'''$, $R_4'''$, $R_5'''$ Wasserstoff, $C_1$-$C_4$-Alkyl, insbesondere Methyl, Halogen, insbesondere Chlor oder $C_1$-$C_4$-Alkoxy, insbesondere Methoxy bezeichnen, mit der Maßgabe, daß mindestens einer, vorzugsweise jedoch zwei dieser Substituenten von Wasserstoff verschieden sind, bezeichnen und

$R_9'$, $R_{12}'$ $C_1$-$C_4$-Alkyl, insbesondere Methyl, Benzyl, das durch Halogen, insbesondere Chlor, Nitro, $C_1$-$C_4$-Al-kyl insbesondere Methyl, $C_1$-$C_4$-Alkoxy, insbesondere Methoxy substituiert sein kann oder gegebenenfalls substituiertes Aminocarbonyl bezeichnen, und

$R_7'$, $R_8'$ für Wasserstoff, Halogen, insbesondere Chlor, $C_1$-$C_4$-Alkyl, insbesondere Methyl und $C_1$-$C_4$-Al-koxy insbesondere Methoxy stehen.

5. Flüssigkristallines Material gemäß Anspruch 4 enthaltend einen Azofarbstoff, bei dem $R_1''' = R_5'''$ und/ oder $R_2''' = R_4'''$ sind.

6. Flüssigkristallines Material gemäß Anspruch 1 enthaltend einen Azofarbstoff der Formel

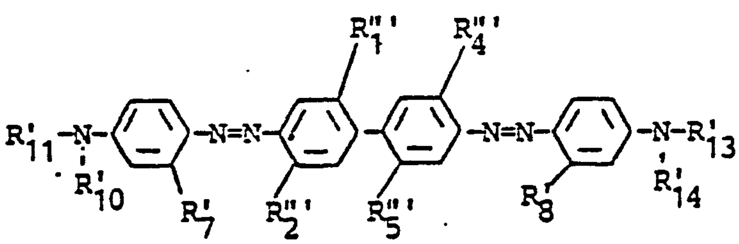

(V)

in der

$R_1'''$, $R_2'''$, $R_4'''$, $R_5'''$, $R_7'$ und $R_8'$ die in Anspruch 4 angegebene Bedeutung haben und

$R_{10}'$, $R_{11}'$, $R_{13}'$, $R_{14}'$ für Wasserstoff, $C_1$-$C_4$-Alkyl, das durch Hydroxy, Cyan, Phenoxy, $C_1$-$C_4$-Alkoxy ($C_1$-$C_4$-Alkoxy)-carbonyloxy substituiert sein kann, Cyclohexyl, Phenyl, Naphthyl, Benzyl, Phenethyl, ($C_1$-$C_4$-Alkyl)-carbonyl, Benzoyl, ($C_1$-$C_4$-Alkylamino)-carbonyl und Phenylaminocarbonyl stehen und $R_{10}'$, $R_{11}'$ oder $R_{13}'$, $R_{14}'$ zusammen unter Einschluß des N-Atoms einen 5- oder 6-gliedrigen Ring bilden können.

7. Flüssigkristallines Material gemäß Anspruch 6 enthaltend einen Azofarbstoff bei dem $R_1''' = R_5'''$ und/ oder $R_2''' = R_4'''$ sind.

8. Nematische Phase positiver dielektrischer Anisotropie gemäß den Annsprüchen 1-7.

9. Flüssigkristallines Material gemäß den Ansprüchen 1-8 enthaltend Gemische verschiedener Farbstoffe.

10. Flüssigkristallines Material gemäß den Ansprüchen 1-9, enthaltend 0,5 bis 5 Gew.-% Farbstoff oder Farbstoffgemisch.

**Claims**

1. Liquid-crystalline material containing 0.01 to 10% by weight of an azo dyestuff of the formula

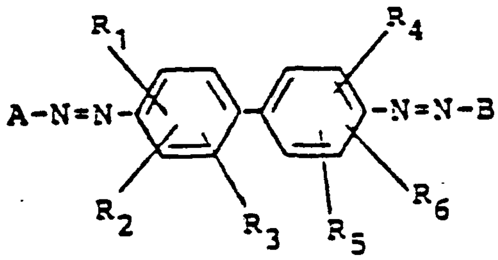

(I)

in which

A and B are radicals of coupling components in particular of the benzene naphthalene and pyrazole series and $R_1$ $R_2$ $R_3$, $R_4$, $R_5$ and $R_6$ are hydrogen halogen trifluoromethyl nitro alkyl, alkoxy, alkylthio, alkylcarbonyl or alkoxycarbonyl with the proviso that at least one of the radicals $R_1$-$R_6$ is different from hydrogen and at least two designate hydrogen.

2. Liquid-crystalline material according to Claim 1, containing an azo dyestuff of the formula

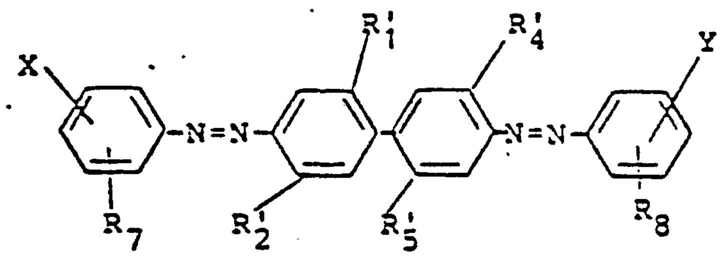

(II)

in which

$R_1'$, $R_2'$, $R_4'$ and $R_5'$ designate hydrogen, halogen, trifluoromethyl, nitro, alkyl, alkoxy, alkylthio, alkylcarbonyl or alkoxycarbonyl, with the proviso that at least one of these radicals is different from hydrogen, $R_7$ and $R_8$ designate hydrogen, halogen, cyano, nitro, alkyl or alkoxy and

X represents $-OR_9$, $-SR_9$ or $-\underset{R_{10}}{\underset{|}{N}}-R_{11}$ and

and

Y represents $-OR_{12}$ $-SR_{12}$ or $-\underset{R_{14}}{\underset{|}{N}}-R_{13}$,

wherein

$R_9$, $R_{10}$, $R_{11}$, $R_{12}$, $R_{13}$ and $R_{14}$ designate hydrogen optionally substituted alkyl optionally substituted cycloslkyl optionally substituted aryl optionally substituted aralkyl or acyl and $R_{10}$ and $R_{11}$ or $R_{13}$ and $R_{14}$ together with the inclusion of the N atom can also form a 5-membered to 8-membered ring.

3. Liquid-crystalline material according to Claim 1, containing an azo dyestuff of the formula

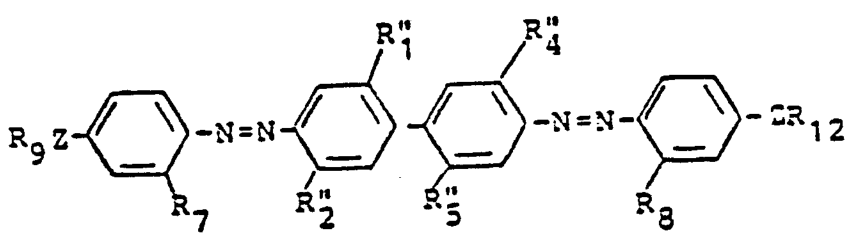

(III)

in which

Z designates an O or S atom $R_1''$, $R_2''$, $R_4''$ and $R_5''$ designate hydrogen halogen in particular chlorine $C_1$-$C_4$-alkyl in particular methyl and $C_1$-$C_4$-alkoxy in particular methoxy with the proviso that either $R_1''$ and $R_5''$ or $R_2''$ and $R_4''$ denote hydrogen and $R_7$, $R_8$, $R_9$ and $R_{12}$ have the meaningsgiven in Claim 2.

4. Liquid-crystalline material according to Claim 1, containing an azo dye stuff of the formula

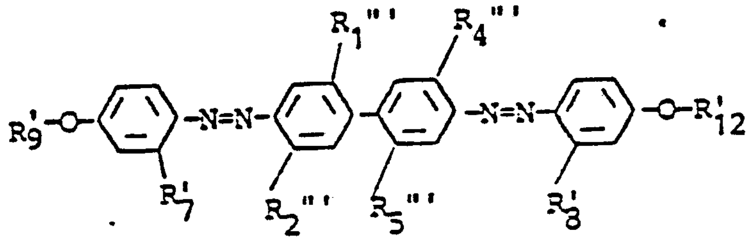

(IV)

in which

$R_1'''$, $R_2'''$, $R_4'''$ and $R_5'''$ designate hydrogen $C_1$-$C_4$-alkyl, in particular methyl, halogen, in particular chlorine, or -$C_4$-alkoxy in particular methoxy with the proviso that at least one but preferably two of these substituents differ(s) from hydrogen and

$R_9'$ and $R_{12}'$ designate $C_1$-$C_4$-alkyl in particular methyl benzyl which can be substituted by halogen in particular chlorine nitro $C_1$-$C_4$-alkyl in particular methyl or $C_1$-$C_4$-alkoxy in particular methoxy, or optionally substituted aminocarbonyl and

$R_7'$ and $R_8'$ represent hydrogen halogen in particular chlorine $C_1$-$C_4$-alkyl in particular methyl and $C_1$-$C_4$-alkoxy in particular methoxy.

5. Liquid-crystalline material according to Claim 4 containing an azo dyestuff in which $R_1''' = R_5'''$ and/or $R_2''' = R_4'''$.

6. Liquid-crystalline material according to Claim 1, containing an azo dye stuff of the formula

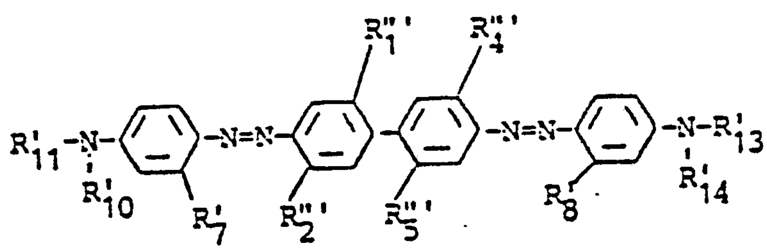

(V)

in which

$R_1'''$, $R_2'''$, $R_4'''$, $R_5'''$, $R_7'$ and $R_8'$ have the meaning specified in Claim 4 and

$R_{10}'$, $R_{11}'$, $R_{13}'$ and $R_{14}'$ represent hydrogen $C_1$-$C_4$-alkyl which can be substituted by hydroxyl cyano phenoxy $C_1$-$C_4$alkoxy or ($C_1$-$C_4$-alkoxy)-carbonyloxy cyclohexyl phenyl naphthyl benzyl phenethyl ($C_1$-$C_4$-alkyl)-carbonyl benzoyl ($C_1$-$C_4$-alkylamino)-carbonyland phenylaminocarbonyl and $R_{10}'$, and $R_{11}'$ or $R_{13}'$ and $R_{14}'$ together with the inclusion of the N atom can form a 5-membered or 6-membered ring.

7. Liquid-crystalline material according to Claim 6 containing an azo dyestuff in which $R_1''' = R_5'''$ and/or $R_2''' = R_4'''$.

8. Nematic phase of positive dielectric anisotropy according to Claims 1-7.

9. Liquid-crystalline material according to Claims 1-8 containing mixtures of various dyestuffs.

10. Liquid-crystalline material according to Claims 1-9 containing 0.5 to 5% by weight of a dyestuff or dyestuff mixture.

**Revendications**

1. Matiere mésomorphe, caractérisée en ce qu'elle contient 0,01 à 10 % en poids d'un colorant azoique de formule

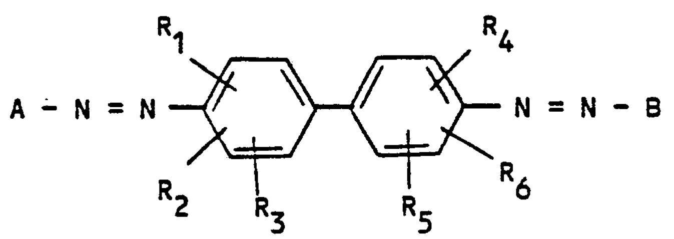

(I)

dans laquelle

A et B représentent des restes de composants de copulation, en particulier de la série du benzene, de la série du naphtalène et de la série du pyrazole;

$R_1$, $R_2$, $R_3$, $R_4$, $R_4$ et $R_6$ représentent chacun l'hydrogène ou un halogène ou un groupe trifluorométhyle, nitro, alkyle, alcoxy alkylthio, alkylcarbonyle, alcoxycarbonyle, avec la condition que l'un au moins des restes $R_1$-$R_6$ soit di f férent de l'hydrogène et au moins deux soient l'hydrogène.

2. Matière mésomorphe selon la revendication 1, caractérisée en ce qu'elle contient un colorant azoique de formule

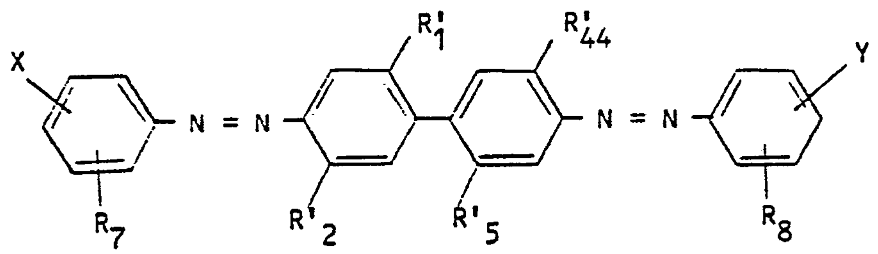

(II)

dans laquelle

$R_1'$, $R_2'$, $R_4'$, $R_5'$ représentent chacun l'hydrogène ou un halogène ou un groupe trifluorométhyle, nitro, alkyle, alcoxy, alkylthio, alkylcarbonyle, alcoxycarbonyle, avec la condition que l'un au moins de ces restes soit différent de l'hydrogène,

$R_7$ et $R_8$ représentent chacun l'hydrogène ou un halogène ou un groupe cyano, nitro, alkyle, alcoxy et

X représente $-OR_9$, $-SR_9$ ou $-\underset{\underset{R_{10}}{|}}{N}-R_{11}$ et

et

Y représente $-OR_{12}$, $-SR_{12}$ ou $-\underset{\underset{R_{14}}{|}}{N}-R_{13}$,

dans lesquels

$R_9$, $R_{10}$, $R_{11}$, $R_{12}$, $R_{13}$ et $R_{14}$ représentent chacun l'hydrogène, un groupe alkyle éventuellement substitué, cycloalkyle éventuellement substitué, aryle éventuellement substitué, aralkyle éventuellement substitué ou acyle et

$R_{10}$ et $R_{11}$ ou $R_{13}$ et $R_{14}$ peuvent former ensemble avec l'atome d'azote un noyau à 5-8 chaînons.

3. Matière mésomorphe selon la revendication 1, caractérisée en ce qu'elle contient un colorant azoîque de formule

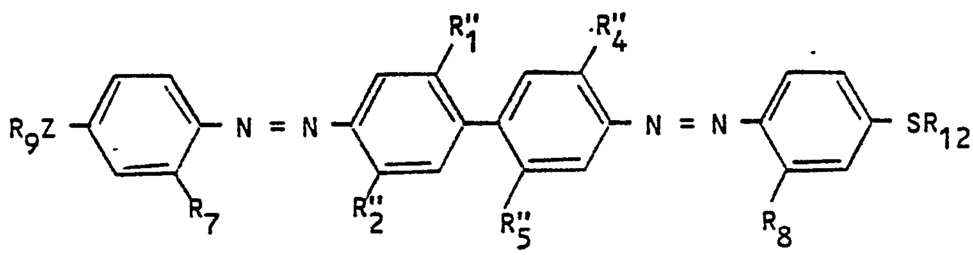

(III)

dans laquelle

Z représente un atome d'oxygène ou de soufre,

$R_1''$, $R_2''$, $R_4''$, $R_5''$ représentent chacun l'hydrogène ou un halogène en particulier le chlore ou un groupe alkyle en $C_1$-$C_4$, en particulier méthyle ou alcoxy en $C_1$-$C_4$ en parti culier méthoxy, avec la condition que soit $R_1''$ et $R_5''$, soit $R_2''$ et $R_4''$ représentent l'hydrogène, et $R_7$, $R_8$, $R_9$ et $R_{12}$ ont les significations indiquées à la revendication 2.

4. Matière mésomorphe selon la revendication 1, caractérisée en ce qu'elle contient un colorant azoique de formule

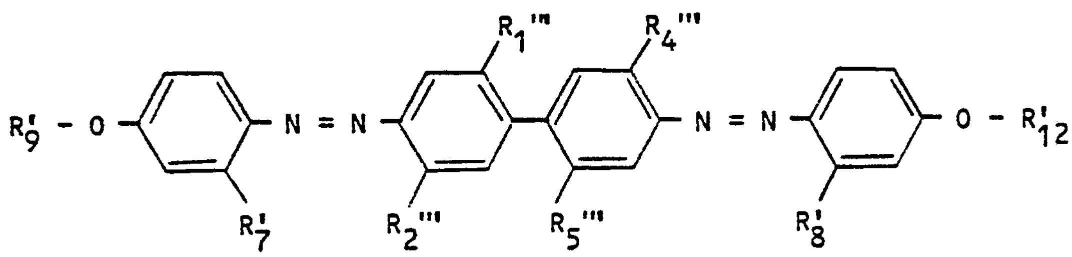

(IV)

dans laquelle $R_1'''$, $R_2'''$, $R_4'''$, $R_5'''$ représentent un halogène en particulier le chlore, l'hydrogène ou un groupe alkyle en $C_1$-$C_4$, en particulier méthyle ou alcoxy en $C_1$-$C_4$, en parti culier méthoxy, avec la condition que l'un au moins mais de préférence deux de ces substituants soient différents de l'hydrogène et

$R_9'$ et $R_{12}'$ représentent chacun un groupe alkyle en $C_1$-$C_4$, en particulier méthyle, benzyle qui peut être substitué par un halogène, en particulier le chlore ou un groupe nitro, alkyle en $C_1$-$C_4$, en particulier méthyle, alcoxy en $C_1$-$C_4$, en particulier méthoxy, ou un groupe aminocarb-onyle éventuellement substitué et

$R_7'$ et $R_8'$ représentent chacun l'hydrogène ou un halogène, en particulier le chlore ou un groupe alkyle en $C_1$-$C_4$, en particulier méthyle ou alcoxy en $C_1$-$C_4$, en parti culier méthoxy.

5. Matière mésomorphe selon la revendication 4, caractérisée en ce qu'elle contient un colorant azoique dans lequel $R_1''' = R_5'''$ et/ou $R_2''' = R_4'''$.

6. Matière mésomorphe selon la revendi cation 1, caractérisée en ce qu'elle contient un colorant azoique de formule

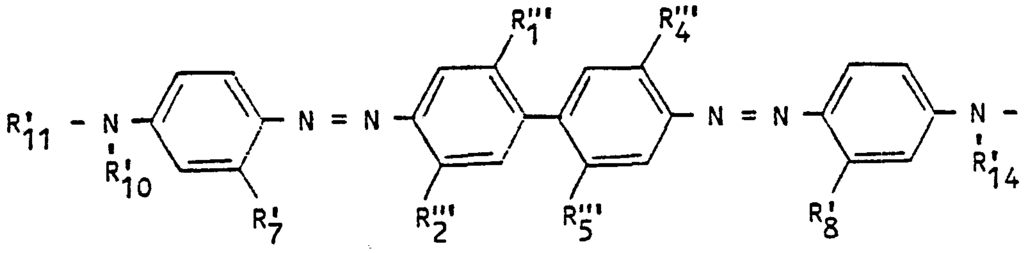

(V)

dans laquelle

$R_1'''$, $R_2'''$, $R_4'''$, $R_5'''$, $R_7'$ et $R_8'$ ont la significations indiquée à la revendication 4 et $R_{10}'$, $R_{11}'$, $R_{13}'$, $R_{14}'$ représentent chacun l'hydrogène ou un groupe alkyle en $C_1$-$C_4$ qui peut être substitué par hydroxy, cyano, phénoxy, alcoxy en $C_1$-$C_4$, (alcoxy en $C_1$-$C_4$)-carbonyloxy, cyclohexyle, phényle, naphtyle, bénzyle, phénéthyle, (alkyl en $C_1$-$C_4$)-carbonyle, benzoyle, (alkylamino en $C_1$-$C_4$)-carbonyle, et phénylaminocarbonyle et $R_{10}'$ et $R_{11}'$ ou $R_{13}'$ et $R_{14}'$ peuvent former ensemble avec l'atome d'azote un cycle à 5 ou 6 chaînons.

7. Matière mésomorphe selon la revendication 6, caractérisée en ce qu'elle contient un colorant azoique dans lequel $R_1''' = R_5'''$ et/ou $R_2''' = R_4'''$.

8. Phase nématique selon les revendications 1 à 7, ayant une anisotropie diélectrique positive.

9. Matière mésomorphe selon les revendications 1 à 8, caractérisée en ce qu'elle contient des mélanges de colorants différents.

10 Matière mésomorphe selon les revendications 1 à 9, caractérisée en ce qu'elle contient 0,5 à 5% en poids de colorant ou mélange de colorants.